# EUROPÄISCHE PATENTSCHRIFT

(11) **EP 0 536 500 B1**
(45) Veröffentlichungstag und Bekanntmachung des Hinweises auf die Patenterteilung: **08.02.1995**
(21) Anmeldenummer: 92113510.9
(22) Anmeldetag: 07.08.1992
(51) Int. Cl.: C01B 31/02

(54) **Verfahren zur Herstellung von Fulleren**
Method for preparation of fullerene
Procédé de préparation de fullerène

(30) Priorität: 06.09.1991 DE 4129718; 26.06.1992 DE 4220938
(43) Veröffentlichungstag der Anmeldung: 14.04.1993
(73) Patentinhaber: HOECHST AKTIENGESELLSCHAFT, 65929 Frankfurt am Main (DE)
(72) Erfinder: Dorn, Friedrich-Wilhelm, W-5030 Hürth-Hermülheim (DE); Sachse, Dieter, W-5040 Brühl (DE)

(56) Entgegenhaltungen:
- JOURNAL OF PHYSICAL CHEMISTRY Bd. 90, Nr. 4, 13. Februar 1986, EASTON US Seiten 525 - 528 Q. L. ZHANG ET AL.
- JOURNAL OF PHYSICAL CHEMISTRY Bd. 94, Nr. 24, 29. November 1990, EASTON US Seiten 8634 - 8636 R. E. HAUFLER ET AL.
- NATURE Bd. 347, Nr. 6291, 27. September 1990, LONDON GB Seiten 354 - 358 W. KRAETSCHMER ET AL.

## Beschreibung

Die Erfindung betrifft ein Verfahren zur Herstellung eines Fulleren genannten C₆₀/C₇₀-Gemisches durch Verdampfung von Kohlenstoff bei Drucken von 0,05 bis 3 bar, vorzugsweise 0,05 bis 0,5 bar, Kondensation des gasförmigen Kohlenstoffes an gekühlten Zonen unter Bildung eines Fulleren/Ruß-Gemisches und Abtrennung des Fullerens aus diesem Gemisch.

Mit Fulleren werden aus Kohlenstoff bestehende Käfigmoleküle der Formel C₆₀, C₇₀, C₈₄ u.a. bezeichnet. Der Prototyp C₆₀ erhielt den Namen Buckminsterfulleren. Die Fullerene sind sublimierbare Festkörper und in organischen Lösemitteln begrenzt löslich zu stark rot/braun gefärbten Lösungen; sie sind u.a. durch Massen-, NMR-, IR-, UV/Vis- und Röntgenspektrum eindeutig charakterisiert.

Das C₆₀/C₇₀-Gemisch (ca. 15 Mol% C₇₀ im Gemisch) wurde erstmals 1990 in faßbaren Mengen hergestellt und als feste Substanz isoliert (W. Krätschmer et al. "Solid C₆₀: a new form of carbon", Nature, Vol. 347 (1990), 354-358). Seither erschien eine Vielzahl von Veröffentlichungen zur Herstellung, Reinigung und zu den Eigenschaften der Fullerene, die als Ausgangspunkt zu neuen Synthese- und Stoffklassen gelten (R.M. Baum, "Research on Buckminsterfullerene continues to proliferate", Chem. and Eng. News, 10. Juni 1991, S. 31-33).

Fullerene bilden sich durch schnelles Abkühlen aus Kohlenstoff-Dampf. Nach R.E. Haufler et al., J. Phys. Chem. 94 (1990), 8634-6 wird in einem geschlossenen Gefäß mit gekühlten Wänden zwischen 2 Kohlenstoff (Graphit)-Elektroden ein Lichtbogen hoher Stromdichte erzeugt; alternativ wird nach H.Ajie et al., J. Phys. Chem. 94 (1990) 8630-3 ein dünner Graphitstab durch Widerstandsheizung sehr hoch erhitzt. Der entstehende Kohlenstoff-Dampf kühlt in der umgebenden Helium-Atmosphäre (Druck 0,067 - 0,30 bar) schnell ab und bildet dabei teilweise ein C₆₀/C₇₀-Gemisch, Rest Ruß; beide Komponenten scheiden sich als Belag auf der Gefäßwand ab. Nach dem Abkühlen wird der Belag mechanisch entfernt und mit Benzol oder Toluol extrahiert. Aus der dunkelrot gefärbten Lösung wird durch Eindampfen 1 bis 15 % Roh-Fulleren (C₆₀/C₇₀-Gemisch mit geringem Anteil an Lösemittel) als schwarzer Feststoff gewonnen.

Weiterhin kann Roh-Fulleren aus Ruß auch durch Sublimation (Verdampfung, Abkühlung und Abscheidung) im Vakuum oder unter Schutzgas bei Temperaturen von 300 bis 700°C erhalten werden (vgl. D.M Cox et al.; ACS Symp. Ser., 481 (Fullerenes), 117-25).

Schließlich ist aus der WO-OS 92/04279 ein Verfahren zur Herstellung eines C₆₀/C₇₀-Gemisches bekannt, bei welchem zunächst Graphit bei Drucken von 50 bis 400 Torr (0,07 bis 0,53 bar) bzw. 2 bis 3 atm (2 bis 3 bar) in der inerten Atmosphäre eines Abschreckgases wie Helium oder Argon verdampft wird. Anschließend wird das gesammelte abgeschreckte Kohlenstoff-Produkt mit einem unpolaren organischen Lösemittel (Benzol, Tetrachlormethan) unter Abtrennung der in ihm enthaltenen C₆₀- und C₇₀-Verbindungen extrahiert.

Bei allen bekannt gewordenen Verfahren bildet sich das C₆₀/C₇₀-Gemisch in Gegenwart von Helium oder auch von Argon. Andere Gase sind an keiner Stelle genannt.

Demgegenüber ist es Aufgabe der Erfindung, ein Herstellverfahren anzugeben, bei welchem auf die Verwendung von teurem Helium verzichtet werden kann.

Es wurde gefunden, daß sich Fullerene im Lichtbogen in vergleichbarer Ausbeute bilden, wenn anstelle von Helium CO, CO₂ oder O₂ die Gasatmosphäre des Reaktionsbehälters bilden. Ein Vorteil der Verwendung dieser sauerstoffhaltigen Gase besteht weiter darin, daß bei gleicher Stromdichte die Verdampfungsgeschwindigkeit der Graphitelektroden stark erhöht wird.

Im einzelnen ist das Verfahren zur Herstellung eines Roh-Fulleren genannten C₆₀/C₇₀-Gemisches durch Verdampfung von Kohlenstoff bei Drucken von 0,05 bis 3 bar, vorzugsweise von 0,05 bis 0,5 bar, Kondensation des gasförmigen Kohlenstoffs an gekühlten Zonen unter Bildung eines Fulleren/Ruß-Gemisches und Abtrennung des Fullerens aus diesem Gemisch gemäß der Erfindung nunmehr dadurch gekennzeichnet, daß die Verdampfung und Kondensation in sauerstoffhaltigen Gasen aus der Gruppe Kohlenmonoxid (CO), Kohlendioxid (CO₂), Sauerstoff (O₂) oder deren Mischungen durchgeführt wird.

Das erfindungsgemäße Verfahren kann weiterhin wahlweise auch noch dadurch ausgestaltet sein, daß
a) die Verdampfung und Kondensation in einer Mischung eines oder mehrerer der genannten sauerstoffhaltigen Gase mit Edelgasen durchgeführt wird;
b) die Abtrennung des Fullerens aus dem Gemisch durch Extraktion mit organischen Lösungsmitteln erfolgt;
c) die Abtrennung des Fullerens aus dem Gemisch durch Verdampfen bei erhöhter Temperatur erfolgt.

Vorteilhaft ist beim Verfahren gemäß der Erfindung, daß durch die Verwendung von sauerstoffhaltigen Gasen bei der Verdampfung von Kohlenstoff und der Kondensation des gasförmigen Kohlenstoffes die Verdampfungsgeschwindigkeit der Graphitelektroden bei gleicher Stromdichte stark erhöht wird.

### Beispiel 1 (CO)

In einem mit Schauglas versehenen evakuierbaren Metallbehälter von 150 mm innerem Durchmesser und 170 mm Innenhöhe mit wassergekühlten Wänden waren axial als Kathode ein Stab mit 8 mm Durchmesser aus Graphit EK 78 (Ringsdorff) und als Anode ein Stab aus Graphit EK 86 (Ringsdorff) mit 6 mm Durchmesser angeordnet. Beide Elektroden wiesen nach außen führende Stromzuführungen auf, wobei die Stromzuführung zur Anode zum Ausgleich des Anoden-Verzehrs axial verschiebbar war. Der Metallbehälter wurde auf 10⁻⁵ bar evakuiert und mit CO auf 0,2 bar aufgefüllt. Während des Lichtbogen-Betriebs wurde der Druck bei einem Durchfluß von 0,5 l CO/h mittels Druckregler auf 0,20 bar konstant gehalten. Der Abstand von Anode und Kathode wurde auf ca. 2 mm gebracht. Anschließend wurde ein Lichtbogen gezündet und auf I = 120 A (U = 43 V) eingeregelt. Die Anode verdampfte schnell und wurde zur Aufrechterhaltung eines Lichtbogens von 1 bis 10 mm Länge entsprechend nachgeführt. Nachdem nach 8,8 min 104 mm des Anodenstabs entsprechend 5,93 g Graphit verdampft waren, wurde der Strom abgeschaltet. Nach dem Abkühlen wurden 4,33 g an den gekühlten Flächen abgeschiedenes Ruß/Fulleren-Gemisch isoliert und darin der Gehalt an Roh-Fulleren (C₆₀/C₇₀-Gemisch) durch erschöpfende Extraktion mit Toluol, Abdampfen des Lösemittels und Trocknen bei 150°C zu 7,1 % bestimmt.

### Beispiel 2 (He; Vergleichsbeispiel)

Beispiel 1 wurde mit der Änderung wiederholt, daß anstelle von CO Helium eingesetzt wurde. Druck: 0,2 bar; Durchfluß: 0,44 l He/h; Strom: 142 A; Spannung: 33,5 V; Dauer: 15 min; Anoden-Verzehr: 105 mm entspr. 6,53 g. Es wurden 3,28 g Ruß/Fulleren-Gemisch mit 7,4 % Roh-Fulleren isoliert.

### Beispiel 3 (CO₂)

Beispiel 1 wurde mit der Änderung wiederholt, daß der Metallbehälter anstelle von CO mit 0,11 bar CO₂ gefüllt war und der Druck während des Lichtbogenbetriebs 0,20 bar betrug. Mit einem Lichtbogen-Strom von 85 A (Spannung 37 V) wurde die Verdampfung des Anodenstabs 15 min lang durchgeführt. Trotz gegenüber Beispiel 2 erheblich verringerter Stromstärke betrug der Anodenverzehr 110 mm entsprechend 6,89 g. 2,90 g des an der Behälterwand abgeschiedenen Rußes enthielten 8,5 % Roh-Fulleren.

### Beispiel 4 (O₂)

Beispiel 1 wurde mit der Änderung wiederholt, daß der Metallbehälter anstelle von CO mit 0,10 bar O₂ gefüllt und verschlossen war. Während des Lichtbogenbetriebs stellte sich ein Druck von 0,41 bar ein, der nach Abkühlen und Temperaturausgleich auf 0,185 bar zurückging. Bei einem Strom von 80 A (Spannung 40 V) wurden in 17 min von der Anode 110 mm entsprechend 6,80 g verdampft. 4,41 g des abgeschiedenen Rußes enthielten 6,9 % Roh-Fulleren. Der Druckanstieg von 0,10 auf 0,185 bar zeigte, daß 85 % des eingebrachten O₂ zu CO umgesetzt waren.

### Beispiel 5 (CO)

Der Metallbehälter einer Einrichtung gemäß Beispiel 1 wurde nach dem Evakuieren mit CO gefüllt und sein Druck während des Lichtbogenbetriebes bei 1,2 bar mittels Druckregler konstant gehalten. In mehreren Abschnitten wurden mit Hilfe eines Lichtbogenstromes von 130 A (Spannung: 40 V) in einem Zeitraum von 33 min 608 mm entsprechend 35,1 g Ruß der Graphitanode verdampft. Nach Abkühlen wurden aus dem Metallbehälter 28,4 g Ruß, welcher sich an dessen gekühlten Wänden abgeschieden hatte, entnommen.
Ein Teil dieses Rußes wurde unter einem Preßdruck von 1,3 kbar verdichtet und anschließend in einem Rohr aus Quarzglas 60 min bei 650°C im Vakuum (0,005 bar) erhitzt. Dabei verdampfte das im Ruß enthaltene Fulleren und kondensierte im unbeheizten Teil des Rohres. Der Masseanteil des abgetrennten Roh-Fullerens betrug 6,4 %, bezogen auf den eingesetzten Ruß.
Aus einem weiteren Teil dieses Ruß wurden durch Extraktion mit Toluol 7,2 % Roh-Fulleren, bezogen auf den eingesetzten Ruß, erhalten.

## Patentansprüche

1. Verfahren zur Herstellung eines Fulleren genannten C₆₀/C₇₀-Gemischs durch Verdampfung von Kohlenstoff bei Drucken von 0,05 bis 3 bar, vorzugsweise von 0,05 bis 0,5 bar, Kondensation des gasförmigen Kohlenstoffs an gekühlten Zonen unter Bildung eines Fulleren/Ruß-Gemisches und Abtrennung des Fullerens aus diesem Gemisch, dadurch gekennzeichnet, daß die Verdampfung und Kondensation in sauerstoffhaltigen Gasen aus der Gruppe CO, CO₂, O₂ oder deren Mischungen durchgeführt wird.

2. Verfahren nach Anspruch 1, dadurch gekennzeichnet, daß die Verdampfung und Kondensation in einer Mischung eines oder mehrerer der genannten sauerstoffhaltigen Gase mit Edelgasen durchgeführt wird.

3. Verfahren nach Anspruch 1 oder 2, dadurch gekennzeichnet, daß die Abtrennung des Fullerens aus dem Gemisch durch Extraktion mit organischen Lösungsmitteln erfolgt.

4. Verfahren nach Anspruch 1 oder 2, dadurch gekennzeichnet, daß die Abtrennung des Fullerens aus dem Gemisch durch Verdampfen bei erhöhter Temperatur erfolgt.

## Claims

1. A process for the preparation of a C₆₀/C₇₀ mixture, known as fullerene, by vaporization of carbon under pressures of 0.05 to 3 bar, preferably of 0.05 to 0.5 bar, condensation of the gaseous carbon on cooled zones with the formation of a fullerene/carbon black mixture and removal of the fullerene from this mixture, which comprises carrying out the vaporization and condensation in oxygen-containing gases selected from the group comprising CO, CO₂ and O₂ or mixtures thereof.

2. A process as claimed in claim 1, wherein the vaporization and condensation are carried out in a mixture of one or more of the said oxygen-containing gases with rare gases.

3. A process as claimed in claim 1 or 2, wherein the removal of the fullerene from the mixture takes place by extraction with organic solvents.

4. A process as claimed in claim 1 or 2, wherein the removal of the fullerene from the mixture takes place by vaporization at elevated temperature.

## Revendications

1. Procédé pour la préparation d'un mélange C₆₀/C₇₀ appelé fullerène par évaporation de carbone à des pressions de 0,05 à 3 bars, de préférence de 0,05 à 0,5 bars, par condensation du carbone sous forme gazeuse sur des zones refroidies en présence de formation d'un mélange fullerène/noir de carbone et par séparation du fullerène de ce mélange, caractérisé en ce que l'évaporation et la condensation sont effectuées dans des gaz contenant de l'oxygène provenant du groupe constitué par CO, CO₂, O₂ ou des mélanges de ceux-ci.

2. Procédé selon la revendication 1, caractérisé en ce que l'évaporation et la condensation sont effectuées dans un mélange d'un ou plusieurs des gaz cités contenant de l'oxygène et de gaz rares.

3. Procédé selon la revendication 1 ou 2, caractérisé en ce que la séparation du fullerène du mélange s'effectue par extraction avec des solvants organiques.

4. Procédé selon la revendication 1 ou 2, caractérisé en ce que la séparation du fullerène du mélange s'effectue par évaporation à une température élevée.
